# EUROPÄISCHE PATENTSCHRIFT

(11) **EP 0 607 553 B1**
(45) Veröffentlichungstag und Bekanntmachung des Hinweises auf die Patenterteilung: **04.06.1997**
(21) Anmeldenummer: 93119866.7
(22) Anmeldetag: 09.12.1993
(51) Int. Cl.: C10M 107/16, C10M 105/04, C10M 111/04, C10M 107/06, C10M 107/04, C10M 107/02

(54) **Verwendung von Polymethylalkanen als biologisch abbaubare Grundöle in Schmierstoffen und funktionellen Flüssigkeiten**
Use of polymethylalkanes as biodegradable base oils in lubricants and functional fluids
Utilisation de polyméthylalcanes comme huiles de base biodégradables dans des lubrifiants et des fluides fonctionnels

(30) Priorität: 09.01.1993 DE 4300418; 25.10.1993 DE 4336317
(43) Veröffentlichungstag der Anmeldung: 27.07.1994
(73) Patentinhaber: HÜLS AKTIENGESELLSCHAFT, 45764 Marl (DE)
(72) Erfinder: Dr. Hoppe, Dirk, D-48301 Nottuln (DE); Dr. Pennewiss, Horst, D-64289 Darmstadt (DE); Dr. Kraushaar, Frank, D-45149 Essen (DE); Dr. Stehr, Micael, D-45881 Gelsenkirchen (DE); Dr. Streck, Roland, D-45772 Marl (DE); Dr. Monkiewicz,Jaroslaw, D-45770 Marl (DE); Dr. Wey, Hans Günther, D-45470 Mülheim/Ruhr (DE)

(56) Entgegenhaltungen:
- EP-A- 0 088 453
- EP-A- 0 344 374
- EP-A- 0 468 109
- EP-A- 0 518 021
- FR-A- 2 675 812
- US-A- 3 923 919

## Beschreibung

Durch das gestiegene Umweltbewußtsein und die verschärfte Umweltgesetzgebung wird die Anwendung von Schmierölen und funktionellen Flüssigkeiten, z. B. Hydraulikölen, auf Basis biologisch nicht abbaubarer Grundöle immer kritischer gesehen, da diese bei Leckagen, nach Unfällen oder auch beim Flüssigkeitsaustausch in die Umwelt, speziell in den Boden, gelangen können. Die so verunreinigten Böden müssen mit erheblichem Aufwand saniert werden. Zunehmend wird deshalb die biologische Abbaubarkeit derartiger Produkte gefordert.

Als Grundöle für biologisch abbaubare Schmierstoffe und funktionelle Flüssigkeiten bieten sich im wesentlichen drei Produktklassen an: synthetische Ester, native Ester sowie Polylalkylenglykole (PAG), vornehmlich Polyethylenglykole (PEG). Diese Verbindungsklassen zeigen neben zum Teil guter biologischer Abbaubarkeit auch sehr gute schmiertechnische Eigenschaften, wie zum Beispiel verbessertes Viskositäts-/Temperaturverhalten, hohe Schmierfähigkeit und Temperaturbeständigkeit.

Neben obigen positiven Eigenschaften weisen diese Grundöltypen jedoch einige Nachteile auf, die ihre Anwendung in bestimmten Bereichen stark einschränken:
Die biologisch abbaubaren PAG sind in der Regel wasserlöslich. Dadurch sind Leckagen schlecht zu erkennen, und die Kontamination wird schnell verteilt. Zudem weisen PAG häufig eine hohe Fischtoxizität auf. PAG sind mit den herkömmlichen Lacken und Dichtungsmaterialien zum größten Teil nicht verträglich. Ein weiterer Nachteil sind die teilweise erheblichen Probleme bei der Umstellung von Altanlagen, da diese, wegen der Nichtmischbarkeit der PAG mit mineralölbasischen Produkten, vollständig entleert und gereinigt werden müssen.

Synthetische wie auch native Ester weisen eine nur geringe hydrolytische Stabilität auf. Die Dichtungsverträglichkeit ist wie bei den PAG problematisch. Des weiteren sind spezielle Additivpakete zur Formulierung brauchsfertiger Produkte notwendig.

Native Ester, wie z. B. Rapsöl, haben zudem den Nachteil geringer Oxidationsstabilität, zeigen teilweise ein schlechtes Tieftemperaturverhalten und weisen eine schwankende Produktqualität auf.

Mineralölbasische und synthetische Kohlenwasserstoffe, z. B. Poly-α-olefine (PAO), weisen die oben erwähnten Nachteile nicht auf, sind jedoch biologisch nur langsam abbaubar, da es sich um Gemische geradkettiger, cyclischer und/oder stark verzweigter Verbindungen handelt. Bei einem hohen Anteil der gut abbaubaren n-Alkane liegen derartige Gemische bei Raumtemperatur als Wachse vor und sind als Schmierstoffe ungeeignet.

Eine Ausnahme sind lediglich dimere α-Olefine (PAO 2), die gemäß CEC L-33-T-82 zu 45 bis 92 % biologisch abbaubar sind, siehe EP-A 0 468 109. Diese Produkte sind jedoch aufgrund ihrer niedrigen Viskostität (KV = 2 mm²/s bei 100 °C) für sich nur in wenigen Ausnahmefällen als Grundöle einsetzbar und werden hauptsächlich in geringer Konzentration Schmierölformulierungen zugesetzt. Trimere α-Olefine (PAO 4, KV = 4 mm²/s bei 100 °C) hingegen zeigen in dem oben erwähnten CEC-Test eine deutlich geringere biologische Abbaubarkeit von nur 24 %. Somit sind diese Komponenten als Grundöle für biologisch abbaubare funktionelle Flüssigkeiten und Schmierstoffe nicht geeignet.

Aufgabe der vorliegenden Erfindung war es, Verbindungen aus der Gruppe der synthetischen Kohlenwasserstoffe zu finden, die zum einen als Grundöle für Schmierstoffe und funktionelle Flüssigkeiten geeignet, zum anderen gemäß CEC L-33-T-82 zu mindestens 50 %, insbesondere bis 80 % und darüber, biologisch abbaubar sind.

Wir haben in Lösung der Aufgabe überraschend gefunden, daß bestimmte Polymethylalkane weitgehend biologisch abbaubar sind. Dies steht im Gegensatz zur gängigen Lehrmeinung (z. B. DGMK Forschungsbericht 461-01, S. 30), wonach Methylgruppen die biologische Abbaubarkeit sogar verhindern können. Von der schmierstofftechnischen Seite her gesehen sind diese Verbindungen den gemäß dem Stand der Technik eingesetzten PAO zumindest gleichwertig, teilweise sogar überlegen.

Gegenstand der Erfindung ist daher die Verwendung von Polymethylalkanen mit endständigen Methylgruppen sowie Methylen- und Ethylidengruppen der Formel I 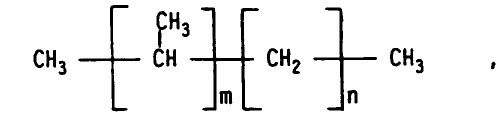 worin die Gesamtzahl der C-Atome n + 2 m + 2 20 bis 60 und das Verhältnis der Methyl- und Methylengruppen zu den Ethylidengruppen 3 bis 20 : 1 beträgt und die Ethylidengruppen stets durch mindestens eine Methylengruppe getrennt sind als biologisch abbaubare Grundöle für Schmierstoffe und funktionelle Flüssigkeiten.

Die erfindungsgemäße Verwendung der Polymethylalkane erfolgt als Grundöl an sich in Formulierungen mit üblichen Additiven und Mischungen mit anderen biologisch abbaubaren oder nicht abbaubaren Grundölen.

Hergestellt werden die Polymethylalkane z. B. durch Cooligomerisierung von Ethen und Propen, durch Pyrolyse von Ethen/Propen-Copolymeren und anschließende Hydrierung oder auch durch Oligomerisierung von 1,ω-Dienen und anschließende Hydrierung. Besonders geeignete Polymethylalkene werden durch Oligomerisierung von α,ω-Olefinen gemäß EP-A-518021 in flüssiger Phase bei 150 bis 350 °C in Gegenwart von AlX₃ oder AlX₂H als Katalysatoren hergestellt und anschließend mit üblichen Hydrierkatalysatoren, wie z. B. Pd/C, Raney-Nickel, bei einem Druck von 20 bis 150 bar hydriert. X bedeutet einen (cyclo)aliphatischen oder aromatischen Rest mit 1 bis 30 C-Atomen.
Die Pyrolyse von Ethen/Propen-Copolymeren erfolgt bei Temperaturen von 300 - 450 °C und einem Druck von 0,5 bis 200 bar, anschließend wird mittels üblichen Hydrierkatalysatoren hydriert.

### Beispiele

### Beispiel 1

Synthetisches, methylsubstituiertes n-Alkangemisch, hergestellt durch Oligomerisierung von 1,7-Octadien gemäß EP-A-518021 mit anschließender Hydrierung mittels eines Ni-Katalysators bei 160 °C und 95 bar Druck bis Jodzahl ≤ 1 sowie destillativer Fraktionierung, charakterisiert durch ein mittleres Molekulargewicht Mn von 418 (bestimmt durch GPC) und im Mittel 9,5 Methylen- und Methylgruppen pro Ethylidengruppe mit folgenden Eigenschaften:

| | | |
|---|---|---|
| Viskosität bei 100 °C : | 4,0 mm²/s | DIN 51 562 |
| Viskosität bei 40 °C : | 20,1 mm²/s | DIN 51 562 |
| Viskositäts index E :: | 91 | DIN ISO 2909 |
| Pour Point : | - 45 °C | DIN ISO 3016 |
| Flammpunkt : | 214 °C | DIN ISO 2592 |
| Flüchtigkeit nach Noak : | 18 % | DIN 51 581 |
| FZG-Test A 8,3/90 : | Gutlaststufe 4 | DIN 51 354 |

Dieses Kohlenwasserstoffgemisch besitzt nach CEC-L-33-T-82 eine biologische Abbaubarkeit von 92 %.

### Beispiel 2

Synthetisches, methylsubstituiertes n-Alkangemisch, hergestellt durch Oligomerisierung von 1,7-Octadien mit anschließender Hydrierung gemäß Beispiel 1 bis Jodzahl ≤ 1 sowie destillativer Fraktionierung, charakterisiert durch ein mittleres Molekulargewicht Mn von 472 (bestimmt durch GPC) und im Mittel 8,5 Methylen- und Methylgruppen pro Ethylidengruppe mit folgenden Eigenschaften:

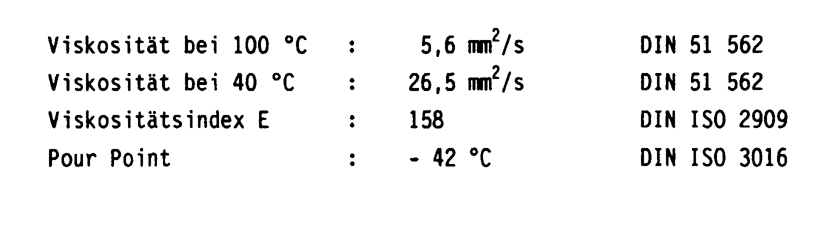

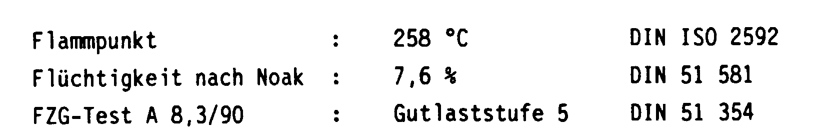

Dieses Kohlenwasserstoffgemisch besitzt nach CEC-L-33-T-82 eine biologische Abbaubarkeit von 82 %.

### Beispiel 3

Synthetisches, methylsubstituiertes n-Alkangemisch, hergestellt durch Oligomerisierung von 1,7-Octadien mit anschließender Hydrierung gemäß Beispiel 1 bis Jodzahl < 1 sowie destillativer Fraktionierung, charakterisiert durch ein mittleres Molekulargewicht Mn von 543 (bestimmt durch GPC) und im Mittel 7,8 Methylen- und Methylgruppen pro Ethylidengruppe mit folgenden Eigenschaften:

| | | |
|---|---|---|
| Viskosität bei 100 °C : | 8,5 mm²/s | DIN 51 562 |
| Viskosität bei 40 °C : | 46,8 mm²/s | DIN 51 562 |
| Viskositätsindex E : | 162 | DIN ISO 2909 |
| Pour Point : | - 42 °C | DIN ISO 3016 |
| Flammpunkt : | 244 °C | DIN ISO 2592 |
| Flüchtigkeit nach Noak : | 5 % | DIN 51 581 |
| FZG-Test A 8,3/90 : | Gutlaststufe 6 | DIN 51 354 |

Dieses Kohlenwasserstoffgemisch besitzt nach CEC L-33-T-82 eine biologische Abbaubarkeit von 89 %.

### Beispiel 4

### Pyrolyse eines Ethylen/Propylenpolymeren

In einem 5 l Rührautoklaven werden 1,8 kg eines Ethen/Propen-Cooligomeren unter Stickstoff auf 380 °C erhitzt auf 380 °C erhitzt und 4 Stunden bei dieser Temperatur belassen. Während dieser Zeit steigt der Druck auf 20 bar an. Nach Abkühlen auf Raumtemperatur und Entspannen erhält man 1,6 kg eines braungelben Öls, das eine Jodzahl von 47 aufweist. Dieses Öl wird bei 100 °C und einem Wasserstoff-Partialdruck von 100 bar an Pd/C hydriert (Jodzahl 2,9) und nach Filtrieren über Celite destillativ in Fraktionen unterschiedlicher Viskosität getrennt.

### Beispiel 4 A

Synthetisches, methylsubstituiertes n-Alkangemisch, hergestellt gemäß Beispiel 4, mit einer Jodzahl von 2,5 und folgenden Eigenschaften:

| | | |
|---|---|---|
| Viskosität bei 100 °C : | 4,7 mm²/s | DIN 51 562 |
| Viskosität bei 40 °C : | 21,3 mm²/s | DIN 51 562 |
| Viskositäts indes E : | 144 | DIN ISO 2909 |
| Flammpunkt : | 210 °C | DIN ISO 2592 |

Dieses Kohlenwasserstoffgemisch ist gemäß CEC-L-33-T-82 zu 66 % biologisch abbaubar.

### Beispiel 4 B

Synthetisches, methylsubstituiertes n-Alkangemisch, hergestellt gemäß Beispiel 4, mit einer Jodzahl von 4,0 und folgenden Eigenschaften:

| | | |
|---|---|---|
| Viskosität bei 100 °C : | 9,9 mm²/s | DIN 51 562 |
| Viskosität bei 40 °C : | 63,3 mm²/s | DIN 51 562 |
| Viskositäts index E : | 141 | DIN ISO 2909 |
| Flammpunkt : | 212 °C | DIN ISO 2592 |

Dieses Koh lenwasserstoffgemisch ist gemäß CEC-L-33-T-82 zu 55 % biologisch abbaubar.

### Beispiel 5 (Vergleichsbeispiel)

Synthetisches Kohlenwasserstoffgemisch aus hydrierten α-Decen-Oligomeren mit einem mittleren Molekulargewicht von Mn von 509 (PAO 4) und folgenden Eigenschaften:

| | | |
|---|---|---|
| Viskosität bei 100 °C : | 4,0 mm²/s | DIN 51 562 |
| Viskosität bei 40 °C : | 17,0 mm²/s | DIN 51 562 |
| Viskositätsindex E : | 137 | DIN ISO 2909 |
| Pour Point : | < - 70 °C | DIN ISO 3016 |
| Flammpunkt : | 220 °C | DIN ISO 2592 |
| Flüchtigkeit nach Noak : | 15 % | DIN 51 581 |
| FZG-Test A 8,3/90 : | Gutlaststufe 3 | DIN 51 354 |

Dieses Koh lenwasserstoffgemisch besitzt nach CEC-L-33-T-82 eine biologische Abbaubarkeit von 23 %.

### Beispiel 6 (Vergleichsbeispiel)

Synthetisches Kohlenwasserstoffgemisch aus hydrierten α-Decen-Oligomeren mit einem mittleren Molekulargewicht von Mn von 656 (PAO 6) und folgenden Eigenschaften:

| | | |
|---|---|---|
| Viskosität bei 100 °C : | 5,6 mm²/s | DIN 51 562 |
| Viskosität bei 40 °C : | 29,0 mm²/s | DIN 51 562 |
| Viskositätsindex E : | 135 | DIN ISO 2909 |
| Pour Point : | - 66 °C | DIN ISO 3016 |
| Flammpunkt : | 234 °C | DIN ISO 2592 |
| Flüchtigkeit nach Noak : | 7,5 % | DIN 51 581 |
| FZG-Test A 8,3/90 : | Gutlaststufe 3 | DIN 51 354 |

Dieses Kohlenwasserstoffgemisch besitzt nach CEC L-33-T-82 eine biologische Abbaubarkeit von 25 %.

### Beispiel 7 (Vergleichsbeispiel)

Synthetisches Kohlenwasserstoffgemisch aus hydrierten α-Decen-Oligomeren mit einem mittleren Molekulargewicht von Mn von 709 (PAO 8) und folgenden Eigenschaften:

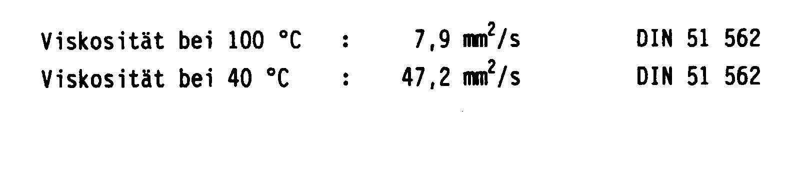

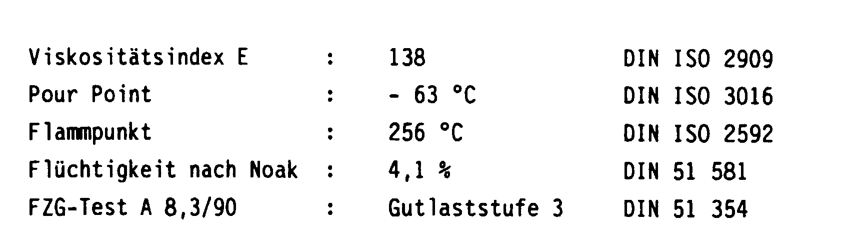

Dieses Kohlenwasserstoffgemisch besitzt nach CEC L-33-T-82 eine biologische Abbaubarkeit von 24 %.

### Beispiel 8 (Anwendungsbeispiel)

Durch Mischen von 1,5 Teilen eines aschefreien Mehrzweckadditivs mit 98,5 Teilen eines synthetischen Kohlenwasserstoffs gemäß Beispiel 4 A erhält man ein Hydrauliköl, das biologisch weitgehend abbaubar ist.

### Beispiel 9 (Anwendungsbeispiel)

Durch Mischen von 2 Teilen eines Additivpakets mit 98 Teilen eines synthetischen Kohlenwasserstoffs gemäß Beispiel 4 A erhält man ein biologisch gut abbaubares Kompressorenöl, das besonders für die Umwelt nicht belastende Kühlgeräte geeignet ist.

### Beispiel 10 (Anwendungsbeispiel)

Durch Mischen von 1,5 Teilen eines aschefreien Mehrzweckadditivs mit 98,5 Teilen eines synthetischen Kohlenwasserstoffgemisches gemäß Beispiel 2 erhält man ein Hydrauliköl, das weitestgehend abbaubar ist.

### Beispiel 11 (Anwendungsbeispiel)

Durch Mischen von 2 Teilen eines geeigneten Additivpakets und 98 Teilen eines synthetischen Kohlenwasserstoffgemisches gemäß Beispiel 2 erhält man ein Motorenöl, das sehr weitgehend abbaubar ist.

## Patentansprüche

1. Verwendung von Polymethylalkanen mit endständigen Methylgruppen sowie Methylen- und Ethylidengruppen der Formel I 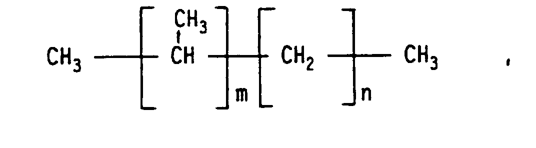 worin die Gesamtzahl der C-Atome n + 2 m + 2 20 bis 60 und das Verhältnis der Methyl- und Methylengruppen zu den Ethylidengruppen 3 bis 20 : 1 beträgt und die Ethylidengruppen stets durch mindestens eine Methylengruppe getrennt sind als biologisch abbaubare Grundöle für Schmierstoffe und funktionelle Flüssigkeiten.

2. Verwendung von Polymethylalkanen nach Anspruch 1, hergestellt durch Oligomerisierung von α,ω-Diolefinen in flüssiger Phase bei 150 bis 350 °C in Gegenwart von AlX₃ oder AlX₂H als Katalysatoren, worin X einen (cyclo) (cyclo)aliphatischen oder aromatischen Rest mit 1 bis 30 C-Atomen bedeutet und anschließende Hydrierung mittels üblichem Hydrierkatalysator.

3. Verwendung von Polymethylalkanen nach Anspruch 1, hergestellt durch Pyrolyse von Ethen/Propen-Copolymeren bei Temperaturen von 300 - 450 °C und einem Druck von 0,5 bis 200 bar und anschließende Hydrierung mittels üblichen Hydrierkatalysatoren.

4. Verwendung von Polymethylalkanen nach den Ansprüchen 1 bis 3 als biologisch abbaubare Grundöle für Schmierstoffe und funktionelle Flüssigkeiten in Kombination mit üblichen Additiven und gegebenenfalls anderen biologisch abbaubaren oder nicht abbaubaren Grundölen.

## Claims

1. The use of polymethylalkanes having terminal methyl groups and methylene and ethylidene groups of the formula I 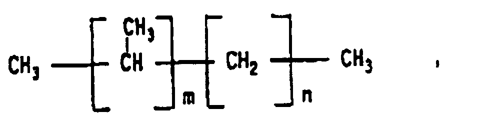 in which the total number of C atoms n + 2 m + 2 is 20 to 60 and the ratio of the methyl and methylene groups to the ethylidene groups is 3 to 20 : 1 and the ethylidene groups are always separated by at least one methylene group, as biodegradable base oils for lubricants and functional fluids.

2. The use according to claim 1 of polymethylalkanes prepared by oligomerization of α,ω-diolefins in the liquid phase at 150 to 350°C in the presence of Alx₃ or AlX₂H as catalysts, in which X denotes a (cyclo)-aliphatic or aromatic radical having 1 to 30 C atoms, and subsequent hydrogenation by means of conventional hydrogenation catalyst.

3. The use according to claim 1 of polymethylalkanes prepared by pyrolysis of ethene/propene copolymers at temperatures of 300 - 450°C and a pressure of 0.5 to 200 bar and subsequent hydrogenation by means of conventional hydrogenation catalysts.

4. The use according to any of claims 1 to 3 of polymethylalkanes as biodegradable base oils for lubricants and functional fluids in combination with conventional additives and optionally other biodegradable or nondegradable base oils.

## Revendications

1. Utilisation de polyméthylalcanes ayant des groupes méthyle terminaux ainsi que des groupes méthylène et éthylidène, de formule I : 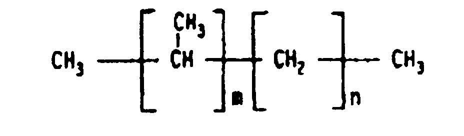 dans laquelle le nombre total des atomes de carbone n + 2 m + 2 s'élève de 20 à 60 et le rapport des groupes méthyle et méthylène aux groupes éthylidène s'élève de 3 à 20 : 1 et les groupes éthylidène sont toujours séparés par au moins un groupe méthylène,
en tant qu'huile de base dégradable biologiquement pour les agents de graissage et les liquides fonctionnels.

2. Utilisation de polyméthylalcanes selon la revendication 1, produits par oligomérisation de α, ω-dioléfines en phase liquide de 150 à 350°C en présence de AlX₃ ou de AlX₂H comme catalyseurs, formule dans laquelle X signifie un radical (cyclo)aliphatique ou aromatique ayant de 1 à 30 atomes de carbone et par hydrogénation consécutive à l'aide d'un catalyseur d'hydrogénation usuel.

3. Utilisation des polyméthylalcanes selon la revendication 1, produits par pyrolyse de copolyméres éthène-propéne à des températures de 300-450°C et à une pression de 0,5 à 200 bars et par hydrogénation consécutive à l'aide de catalyseurs d'hydrogénation usuels.

4. Utilisation de polyméthylalcanes selon les revendications 1 à 3, en tant qu'huiles de base dégradables biologiquement pour des agents de graissage et des liquides fonctionnels, en combinaison avec des additifs usuels et le cas échéant d'autres huiles de base biologiquement dégradables ou non dégradables.
